# EUROPEAN PATENT APPLICATION

(11) **EP 4 507 146 A1**
(43) Date of publication of application: **12.02.2025**
(21) Application number: 23189952.7
(22) Date of filing: 07.08.2023
(51) Int. Cl.: H02G 3/32, F16B 2/08, F16L 3/137

(54) **A CABLE HOLDER, A CABLE MOUNTING KIT AND THE USE OF THE CABLE HOLDER AND THE CABLE MOUNTING KIT**

(71) Applicant: ABB SCHWEIZ AG, 5400 Baden (CH)
(72) Inventor: Rybak, Andrzej, 30-349 Kraków (PL); Rzepecki, Michal, 30-633 Kraków (PL); Markovic, Slavko, 8302 Kloten (CH); Steiner, Patrick, 8718 Schänis (CH)
(74) Representative: AOMB Polska Sp. z.o.o.

(57) **Abstract**

The present invention relates to the field of a cable holders. More specifically, the invention relates to a method to boost the performance of a cable holder by leveraging the design Flexibility offered by additive manufacturing technology.

A cable holder comprising a Fastener (2) For mounting the cable holder to a mounting surface and a base (1) of the cable holder comprising at least one guide (3), wherein the guide (3) is Fixed to the base (1) of the cable holder.

## Description

### Technical Field

The present invention relates to the Field of cable holders. More specifically, the invention relates to a boost the performance of a cable holder by leveraging the design Flexibility offered by additive manufacturing technology.

### Prior Art

Currently, the majority of cable accessories are manufactured using the injection molding (IM) process. While IM has been widely used, it does have limitations, particularly when it comes to Fabricating complex designs. Some intricate Features may be difficult or even impossible to produce using injection molding. Moreover, the complexity of these designs often leads to expensive tooling requirements, such as the inclusion of sliders, moving cores, and other additional Features in the molds. As a result, alternative Fabrication methods that offer greater ease in creating desired designs have become of interest.

Additive Manufacturing (AM) provides numerous opportunities and design Freedom that surpass the capabilities of traditional injection molding. Unlike IM, which requires complex and expensive tooling, 3D printing allows For the production of Functional structures that would otherwise be challenging or impossible to create through traditional manuFacturing methods. Additive manufacturing, enables the creation of three-dimensional objects by building them layer by layer.

In the case of a cable holder that relies on cable ties to secure its position, there is a potential risk of the cable tie Falling or slipping during installation or operation. Therefore, it becomes crucial to employ an appropriate holder design that safeguards the cable tie against any uncontrolled movements.

While injection molding has traditionally been the dominant method For manufacturing cable accessories, its limitations in producing complex designs have prompted the exploration of alternative Fabrication methods. By adopting innovative approaches like additive manufacturing, cable holders can be designed to address the specific challenge of preventing cable tie instability. This enables the creation of holders with customized Features that effectively protect against uncontrolled cable tie behavior during installation and operation.

### Summary of the Invention

According to the invention a cable holder comprising a Fastener For mounting the cable holder to a mounting surface and a base of the cable holder comprising at least one guide, wherein the guide is Fixed to the base of the cable holder.

Preferably the guide is in the Form of a through hole in a base.

PreFerably the through hole has an unchanging cross-section.

PreFerably an additional hole is added to the through hole, preferably with a quadrangle cross-section, wherein axis of both the additional hole and the through hole preferably Forms a right angle.

PreFerably the through hole is curved.

Preferably the guide is in a Form of sleeves, preferably in the Form of two to seven sleeves.

PreFerably the at least one sleeve is opened.

Preferably the cross-section of the guide is an ellipse, any polygon, preferably it is a rectangle.

Preferably it is made of a plastic material, preferably selected From the group comprising PLA, ABS, PET, TPU, PA, PP, PE, PI, PEI, PEEK or made of an UV-curable resin.

Preferably the Fastener is in the Form of a mounting hole, a wall plug or a strut insert.

Preferably the base is curved, preferably a surface of the base Forms a part of a side surface of a cylinder.

Another aspect of the invention is a use of the cable holder For mounting cables.

Another aspect of the invention is a cable mounting kit comprising a cable holder according to anyone of the claims 1 to 11 and at least one cable tie placed in a guide.

Yet another aspect of the invention is a use of the cable mounting kit For mounting cables.

The proposed technical idea revolves around the utilization of the 3D printing method to manufacture cable holders that possess advanced Functionality, such as an embedded runner For the cable tie.

Additive Manufacturing, or 3D printing, offers a significant advantage in this context as it enables the direct Fabrication of complex structures without the limitations typically associated with injection molding (IM). Unlike IM, which may struggle with intricate designs, 3D printing allows For the creation of cable holders with sophisticated Features that enhance their Functionality.

One particular aspect that can be addressed through 3D printing is the optimization of the design to reduce the amount of printed material and save printing time. By employing a design-For-printing approach, the cable holder can be strategically designed to minimize material usage while maintaining its structural integrity. This optimization not only helps reduce costs associated with 3D printed parts but also improves the overall efficiency of the printing process.

Through the use of 3D printing, it becomes possible to integrate an embedded runner For the cable tie directly into the cable holder's design. This embedded runner serves as a secure pathway For the cable tie, ensuring precise placement and preventing unwanted movement. By incorporating such advanced Functionality, the cable holder becomes more efficient and reliable in its cable management capabilities.

Moreover, the inherent Flexibility of 3D printing enables the customization of the cable holder design to suit specific requirements. Each cable holder can be tailored to accommodate different cable sizes or specific application scenarios, providing a versatile solution For cable management needs.

The invention also offers the opportunity to streamline the assembly process of the holder onto the robot arm. Traditional methods often involved complex assembly procedures that could be time-consuming and challenging to execute. However, by harnessing this technology, the cable holder can be designed in a way that enables easy and swift mounting onto the robot arm, thereby increasing the efficiency of the assembly process.

The current issue with traditional cable organizers is that cable ties often shift or Fall out during installation or regular use. This can lead to disorganized cable arrangements, difficulties in organizing and maintaining order in electrical installations or cable networks.

To address this problem, the suggestion is to introduce specific Functionalities to the cable organizer. One of these Features is an embedded holder For the cable tie. This holder has a specialized contour that perfectly matches the shape and size of the cable tie, enabling a secure and stable placement within the organizer.

This solution ensures that the cable tie remains Firmly in place regardless of its position within the holder. There is no risk of the tie Falling or shifting during installation, which greatly Facilitates the cable arrangement process and increases work efficiency. Moreover, the stable placement of the cable tie within the holder ensures that the cables remain properly positioned and will not shift during normal operation, contributing to improved safety and installation performance.

Implementing such a specialized cable holder can significantly enhance the way cables are installed and maintained in various setups, including electrical, telecommunications, and computer networks. It enables more efficient and reliable cable management, with reduced risks of damage or Failures associated with incorrect positioning or movement.

The invention of a cable holder is an innovative solution that can bring numerous benefits to the Field of cable installations. It provides secure and stable retention of cable ties, eliminating the risk of their movement or detachment. This simplifies the cable arrangement process and enhances safety and performance in installations.

The inclusion of embedded runners For cable ties provides several significant advantages, primarily in terms of Facilitating the application of the cable holder. Thanks to this design Feature, the operator no longer needs to concern themselves with precisely positioning the cable ties on the holder, as they are seamlessly integrated into the structure. This streamlines the installation process by eliminating the need For manual adjustment or alignment of the ties.

Furthermore, the embedded guides offer enhanced protection against slipping during operation. Traditional cable holders may be susceptible to the movement or displacement of cable ties, which can compromise the stability and organization of the cables. However, with the proposed solution incorporating embedded guides, the cable ties are effectively secured in place, minimizing the risk of unintended movement or slipping. This ensures that the cables remain neatly organized and reliably positioned throughout their operation.

The overall result of this innovation is twofold. Firstly, it significantly speeds up the installation process of the cable holders. With the cable ties easily integrated into the embedded runners, the time and effort required For precise positioning and adjustments are greatly reduced. This enables operators to install the holders more efficiently, saving valuable time and resources. Traditional cable holders often suffer From the problem of unstable cable tie placement, leading to the potential For ties to dislodge or Fall off entirely. This can result in disorganized cables, potential damage to the installation, and increased safety hazards. However, with the specially designed Features incorporated into the cable holder, such as the embedded guide For cable ties, this risk is minimized. The secure integration of the cable tie within the holder ensures that it remains in place, preventing any unexpected Falls or slippage.

Secondly, the embedded guides contribute to the safe and reliable operation of the cable holders. By securely holding the cable ties in place, the solution mitigates the potential hazards associated with loose or displaced cables. This reduces the likelihood of accidents, such as tripping or electrical issues, that may arise From uncontrolled cable movements. Uncontrolled behavior refers to situations where the cable tie is not securely held in position, leading to movement, shifting, or other unpredictable actions. This can compromise the overall stability and organization of the cables, potentially resulting in hazards such as tangled or damaged wires, electrical issues, or tripping risks. By minimizing uncontrolled behavior through the specially designed Features, the proposed invention promotes a safe and reliable use of the new cable holder design.

These advantages contribute to improved safety and efficiency in cable management and installation processes. By minimizing the risk of cable tie Falls and slips, the proposed invention reduces the potential For accidents, damage, and disruptions. Additionally, by mitigating uncontrolled behavior, the invention ensures that cables remain well-organized and reliably positioned, enhancing the overall Functionality and performance of the cable holder.

### Brief Description of the Drawings

In order to provide more complete understanding of the claimed invention and advantages thereof, the Following description provides an explanation of possible exemplary embodiments thereof with a reference to Figures of the appended drawings, wherein identical designations denote identical parts, and which illustrate the Following:
Fig. 1 shows a general axonometric view of the cable holder with the embedded guides in the Form of internal channel For guiding the cable ties;
Fig. 2 shows a cross-section of the cable holder with visible embedded internal channel which acts as guide For cable tie;
Fig. 3 shows an axonometric view of the cable holder with guides For the cable tie in Form of the sleeves For threading the cable ties;
Fig. 4 shows an axonometric view of the cable holder with guides For the cable tie in the Form of a U-shape For guiding the cable ties.

Main designations:
1. base,
2. Fastener,
3. guide,
4. sleeves,
5. cable tie.

### Preferred Embodiments of the Invention

According to the one embodiment of the invention a cable holder comprising a Fastener 2 For mounting the cable holder to a mounting surface and a base 1 of the cable holder comprising at least one guide 3, wherein the guide 3 is Fixed to the base 1 of the cable holder.

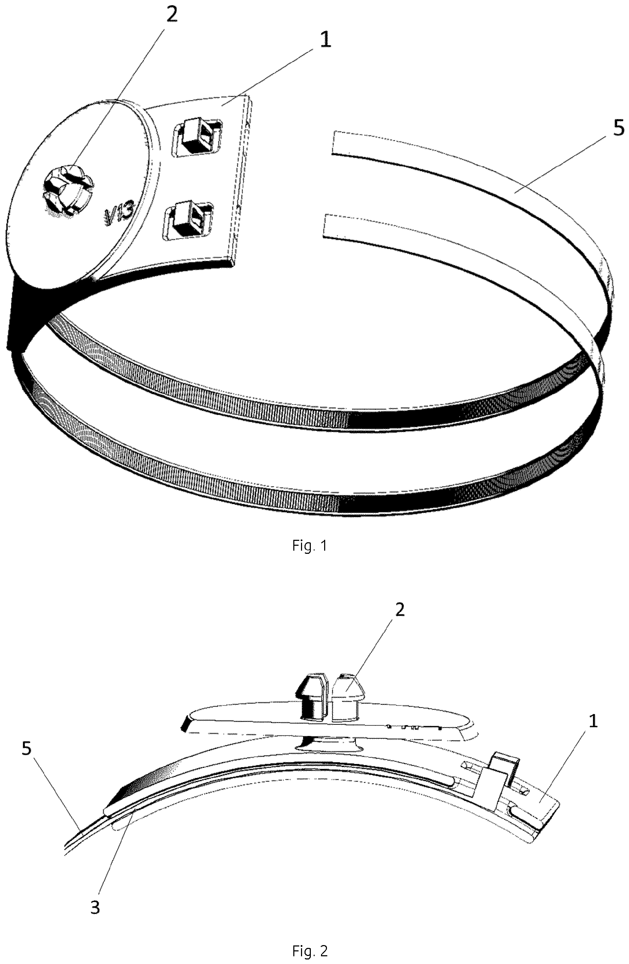

The guide 3 may be designed in different ways. In one example the guide 3 is in the Form of a through hole in a base 1, as shown on Figs. 1 and 2. Preferably the through hole has an unchanging cross-section. It should be noted that at least one guide 3 will be sufficient, however more may be used. In the examples shown on Fig. 1-4 there are two guides 3 on each of the cable holders.

Due to the Fact that the cable holder is intended to be used with a cable tie 5, preferably an additional hole is added to the through hole, preferably with a quadrangle cross-section, wherein axis of both the additional hole and the through hole preferably Forms a right angle. Such additional hole provides a space For a locking part of the cable tie 5 such that the cable tie 5 will not Fall off From the cable holder after it will be placed on its position.

Preferably through hole is curved. It should be noted that manufacturing such through hole, especially curved, is a difficult task when using a traditional manufacturing techniques. It should be noted that using a 3d printing technology makes it easy to manufacture. In some embodiments it is impossible to manufacture such cable holder with a traditional manufacturing techniques.

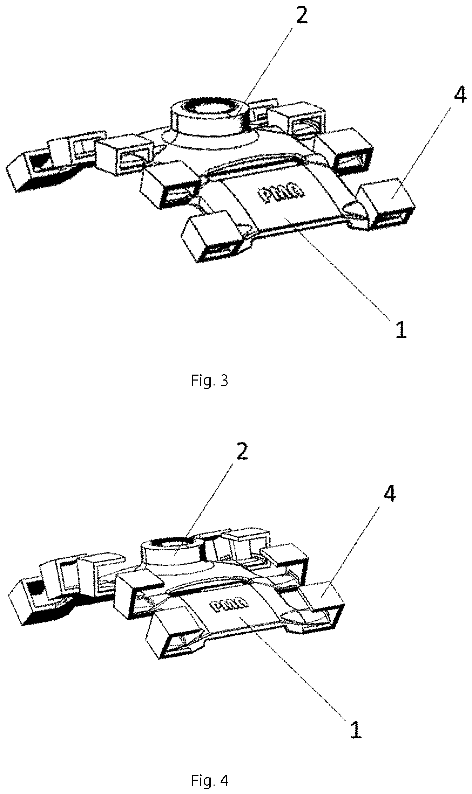

In another embodiment, as shown on Fig. 3 and 4, the guide 3 is in a Form of sleeves 4, preferably in the Form of two to seven sleeves 4. The at least one sleeve 4 may be opened and may Form a C-shape. Preferably the cross-section of the guide 3 is an ellipse, any polygon, preferably it is a rectangle.

The cable holder it is made of a plastic material, preferably selected From the group comprising PLA, ABS, PET, TPU, PA, PP, PE, PI, PEI, PEEK or made of an UV-curable resin. It should be noted that any material which may be used in the 3d printing technique may be used.

The Fastener 2 is in the Form of a mounting hole, a wall plug or a strut insert, however the person skilled in the art will be able to provide other solutions and above mentioned Forms of the Fastener 2 are merely a non-exhaustive examples.

In the preferred embodiment, cable tie 5 is mounted on the robot's arm. In this specific configuration, the Fastener 2 serves as a connecting element For the cable bundle. This arrangement ensures that the cable bundle is securely attached to the robot's arm, contributing to maintaining order and safety during the robot's operation.

The installation of the cable tie 5 on the robot's arm is a critical aspect in the construction and configuration of industrial robots. By using the Fastener 2, the risk of accidental detachment of the cable bundle is minimized, which could otherwise lead to system Failures or disrupt the robot's operation. Properly securing the cables also ensures that they do not obstruct the robot's arm movement while performing various tasks.

It's worth noting that such cable connection setups can also be utilized in other applications, such as industrial installations or automated control systems, where careFul organization and secure Fastening of cables are essential For device efficiency and reliability.

The base 1 is in another example curved, preferably a surface of the base 1 Forms a part of a side surface of a cylinder. Such curved based 1 allows to Form more secure connection with a cables being hold due to the Fact that a bunch the cables held by the cable tie 5 has a circular cross section. Providing the base 1 with a similar shape as the bunch of cables held by the cable tie 5 will also prevent an additional stress in the cable holder.

## Claims

1. A cable holder comprising a Fastener (2) For mounting the cable holder to a mounting surface and a base (1) of the cable holder comprising at least one guide (3), wherein the guide (3) is Fixed to the base (1) of the cable holder.

2. The cable holder according to claim 1, **characterized in that** the guide (3) is in the Form of a through hole in a base (1).

3. The cable holder according to claim 2, **characterized in that** the through hole has an unchanging cross-section.

4. The cable holder according to claim 2 or 3, **characterized in that** an additional hole is added to the through hole, preferably with a quadrangle cross-section, wherein axis of both the additional hole and the through hole preferably Forms a right angle.

5. The cable holder according to anyone of claims 2 to 4, **characterized in that** the through hole is curved.

6. The cable holder according to claim 1, **characterized in that** the guide (3) is in a Form of sleeves (4), preferably in the Form of two to seven sleeves (4).

7. The cable holder according to claim 1, **characterized in that** the at least one sleeve (4) is opened.

8. The cable holder according to anyone of the claims 1 to 7, **characterized in that** the cross-section of the guide (3) is an ellipse, any polygon, preferably it is a rectangle.

9. The cable holder according to anyone of the claims 1 to 8, **characterized in that** it is made of a plastic material, preferably selected From the group comprising PLA, ABS, PET, TPU, PA, PP, PE, PI, PEI, PEEK or made of an UV-curable resin.

10. The cable holder according to anyone of the claims 1 to 9, **characterized in that** the Fastener (2) is in the Form of a mounting hole, a wall plug or a strut insert.

11. The cable holder according to anyone of the claims 1 to 10, **characterized in that** the base (1) is curved, preferably a surface of the base (1) Forms a part of a side surface of a cylinder.

12. A use of the cable holder according to anyone of the claims 1 to 11 For mounting cables.

13. A cable mounting kit comprising a cable holder according to anyone of the claims 1 to 11 and at least one cable tie (5) placed in a guide (3).

14. A use of the cable mounting kit according to claim 13 For mounting cables.
